# FASCICULE DE BREVET EUROPEEN

(11) **EP 0 799 840 B1**
(45) Date de publication et mention de la délivrance du brevet: **29.01.2003**
(21) Numéro de dépôt: 97103834.4
(22) Date de dépôt: 07.03.1997
(51) Int. Cl.: C08F 10/00, C08F 4/654, C08F 210/16

(54) **Composante catalytique et son utilisation en polymérisation des oléfines**
Katalysatorbestandteil und seine Verwendung zur Olefinpolymerisation
Catalyst component and its use for olefin polymerization

(30) Priorité: 02.04.1996 FR 9604109
(43) Date de publication de la demande: 08.10.1997
(73) Titulaire: Atofina, 92800 Puteaux (FR)
(72) Inventeur: Malinge, Jean, 64300 Loubieng (FR); Brun, Claude, 64320 Idron (FR); Lacombe, Jean-Loup, 64230 Artiguellouve (FR)
(74) Mandataire: Leyder, Francis

(56) Documents cités:
- EP-A- 0 127 530
- EP-A- 0 239 475
- EP-A- 0 264 169
- EP-A- 0 361 598
- EP-A- 0 529 977
- EP-A- 0 619 325
- US-A- 4 481 301
- US-A- 4 554 265
- US-A- 5 210 167
- MACROMOLECULAR SYMPOSIA, vol. 89, 1995, ZURICH, pages 139-149, XP000509163 LUCIANI LUCIANO: "some pecular aspects of a new catalyst for propene polymerization"
- DATABASE WPI Section Ch, Week 9705 Derwent Publications Ltd., London, GB; Class A17, AN 97-048464 XP002034356 & JP 08 302 083 A (MITSUI PETROCHEM IND CO LTD) , 19 Novembre 1996

## Description

L'invention concerne un procédé de fabrication d'une composante catalytique solide pour la polymérisation ou copolymérisation des oléfines, menant à un polymère ou copolymère à la distribution des masses moléculaires élargies.

Certains procédés de transformation des matières plastiques nécessitent la mise au point de résines thermoplastiques à la distribution des masses moléculaires élargies, comprenant à la fois une composante de hautes masses et une composante de basses masses. La composante de hautes masses donne au matériau de la consistance pendant sa transformation. En extrusion souflage, cette composante empêche la résine de couler trop rapidement, ce qui permet de mieux plaquer la résine sur les parois du moule lors du soufflage pour former un corps creux.

De plus, cette composante de hautes masses confère au matériau final de meilleures propriétés mécaniques comme la résistance aux chocs, la résistance à la fissuration sous contrainte et la résistance à la traction.

La composante de basses masses agit en tant que lubrifiant ce qui facilite la transformation de la résine.

Un polymère ou copolymère présente une distribution des masses moléculaires élargie s'il présente à la fois un fort Mw/Mn, un fort Mz/Mw et un fort Mz, Mw représentant sa masse moléculaire moyenne en poids, Mn représentant sa masse moléculaire moyenne en nombre, et Mz représentant sa masse moléculaire moyenne en z. Le rapport Mw/Mn est plus représentatif de l'élargissement vers les basses masses, tandis que Mz/Mw et Mz sont plus représentatifs de l'élargissement vers les hautes masses.

La réalisation de catalyseurs menant à de telles résines et par des productivités élevées est particulièrement difficile. Généralement, il est fait appel à un ensemble de réacteur cascades présentant des conditions de polymérisation différentes et menant chacun à une population déterminée de masses moléculaires. Par ce biais, des polymères ou copolymères présentant une distribution des masses moléculaires globalement plus élargie sont généralement obtenus. Cependant, si le catalyseur mène par lui-même dans un seul réacteur à une distribution étroite, le polymère ou copolymère obtenu par un ensemble de réacteurs en cascade présentera autant de distributions étroites que de réacteurs (distribution bimodale, trimodale, etc), lesdites distributions présentant entre elles un faible taux de recouvrement. Une telle composition risque de donner lieu à des démixions lors de la transformation. De plus, une telle distribution de masses moléculaires présente également difficilement à la fois une faible proportion de fortes masses moléculaires et une faible proportion de faibles masses moléculaires.

Il est en outre souhaité que les résines thermoplastiques contiennent le moins possible de résidus catalytiques. Une faible teneur en résidus catalytique confère à la résine une meilleure stabilité thermique et nécessite l'usage de plus faibles quantités d'agents antioxydant. Par exemple, pour le cas des catalyseurs Ziegler à base de MgCl₂/TiCl₄, on cherche à ce que la teneur en titane dans la résine finale soit la plus faible possible car cela traduit une faible teneur en résidus catalytique, c'est-à-dire non seulement une faible teneur en titane, mais également en magnésium et en chlore.

Le procédé selon l'invention fait intervenir un support solide. Ce support donne aux particules de composante catalytique leur forme. Ainsi, si l'on souhaite que la composante catalytique ait une forme sensiblement sphérique, on peut choisir un support présentant une forme sensiblement sphérique.

La composante catalytique selon l'invention confère bien sa forme au polymère ou copolymère en croissance : il existe une bonne réplique morphologique entre le polymère ou copolymère final et la composante catalytique et donc également le support solide utilisé. Cette bonne réplique morphologique vient de l'absence d'éclatement des particules lors de leur croissance, ce qui se traduit de plus par un faible taux de fines particules dans le polymère ou copolymère final. La présence de fines particules n'est pas souhaitée car lors de leur convoyage, par exemple au cours d'une polymérisation en phase gazeuse, celles-ci se chargent électriquement plus facilement et ont tendance à s'agglomérer sur les parois. Ainsi, si l'on souhaite obtenir un polymère ou copolymère présentant une bonne coulabilité, il est souhaitable que les particules de polymère ou copolymère soient sensiblement sphériques, ce qui est plus facilement obtenu à partir de la composante catalytique selon l'invention, grâce à la bonne réplique morphologique lors de la polymérisation ou copolymérisation et dès lors qu'un support sensiblement sphérique a été choisi pour l'élaboration de ladite composante catalytique.

La composante catalytique selon l'invention mène, avec une forte productivité, à un polymère ou copolymère présentant un fort Mw/Mn, un fort Mz/Mw et un fort Mz, ainsi qu'une faible teneur en métal de transition, généralement inférieure à 6 ppm.

Une caractéristique du support solide selon l'invention est que celui-ci est faiblement déshydraté en comparaison avec les supports solides tels qu'ils sont utilisés dans l'art antérieur : dans le cadre de la présente invention, le support solide présente à sa surface au moins 5 groupements hydroxyles par nanomètre carré (OH/nm²).

Les documents EP 32 308, EP 529 978, et EP 296 021 décrivent l'utilisation de silice fortement déshydratée dans le cadre de la préparation d'une composante catalytique solide.

Pour EP 529 978, la déshydratation du support a pu mener à 4 OH/nm².

Le US-A-4,481,301 enseigne une composante catalytique solide obtenue par imprégnation de silice présentant 6 OH/nm² à sa surface avec EtMgCI puis TiCl₄.

Le EP-A-619 325 enseigne des copolymères d'éthylène et d'hexène présentant (tableau 1 page 8) une densité de 0,9518, un Mz de 1.100.000, un rapport de Mz/Mw de 8 et un rapport Mw/Mn de 11.

Dans EP 127 530, la silice est déshydratée à 650°C sous balayage d'azote, ce qui procure une forte déshydratation de sa surface.

Le document EP 239 475 décrit la préparation d'une composante catalytique sur un support de MgCl₂ (exempt de groupements hydroxyles) par réaction d'un composé organique chloré, en présence d'un donneur d'électrons et d'un mélange d'un alkylmagnésium et d'un composé organique de l'aluminium, le composé organique chloré, associé à un donneur d'électrons, étant mis à réagir dans le mélange préalable d'alkylmagnésien, d'aluminoxane et/ou d'aluminosiloxane, et éventuellement de donneur d'électrons. Ce document préconise en particulier la réalisation de deux traitements successifs de chloration.

Le procédé selon l'invention comprend une première étape comprenant une mise en contact entre
- a) un support solide comprenant à sa surface au moins 5 groupements hydroxyles par nanomètre carré (OH/nm²) et
- b) un dérivé organique du magnésium, et
- c) un aluminoxane,
pour obtenir un premier solide, puis une seconde étape comprenant une mise en contact entre le premier solide et un agent chlorant pour obtenir un second solide, puis dans une étape postérieure, une imprégnation du second solide par un dérivé d'un métal de transition.

Le support solide comprend à sa surface de préférence 6 à 19 groupements hydroxyles par nanomètre carré. Le support solide est de préférence un oxyde métallique poreux. L'oxyde métallique peut être la silice, l'alumine, la magnésie ou un mélange d'au moins deux de ces oxydes. Le support d'oxyde métallique comprend de préférence des pores de diamètre allant de 7,5 à 30 nm (75 à 300 Å). De préférence, au moins 10 % de son volume total poreux est constitué de pores de diamètre allant de 7,5 à 30 nm (75 à 300 Å). De préférence , le support d'oxyde métallique poreux présente une porosité allant de 1 à 4 cm³ /g. De préférence, le support solide présente une surface allant de 100 à 600 m²/g.

Il existe de nombreux moyens permettant d'atteindre le taux surfacique préconisé de groupements hydroxyles.

Ces moyens peuvent dépendre de la nature chimique du support. Ces moyens permettent également de débarrasser la surface de l'eau, ce qui est souhaité. Un moyen simple permettant d'atteindre l'état de surface souhaité avant la mise en contact avec le dérivé organique du magnésium, consiste à chauffer le support sous balayage d'un gaz inerte comme l'azote ou l'argon. Pour accélérer la déshydratation, il est possible de chauffer le support solide sous vide. La recherche des conditions d'obtention du taux surfacique en groupements hydroxyles est à la portée de l'homme du métier par des tests de routine. Lorsque le support est en silice, l'état de surface souhaité est généralement obtenu par un chauffage entre 70 et 200° C et de préférence entre 80 et 180° C sous balayage d'azote à la pression atmosphérique pendant 2 à 4 heures.

Le taux surfacique du support en groupement hydroxyle peut être dosé selon des techniques connues telles que par exemple
- par réaction d'un organomagnésien comme CH₃Mgl sur le support, avec mesure de la quantité de méthane dégagé [M^{c} Daniel, J. Catal., 67, 71 (1981)],
- par réaction du triéthylaluminium sur le support, avec mesure de la quantité d'éthane dégagée [Thèse de Véronique Gaschard-Pasquet, Université Claude Bernard-LYON1, France, 1985, pages 221-224].

Le dérivé organique du magnésium b) peut par exemple être représenté par la formule R¹ ₐR²_{b}MgX_{(2-a-b)} dans laquelle
- R¹ et R², pouvant être identiques ou différents représentant des radicaux alkyles ou alcoxy comprenant de 1 à 12 atomes de carbone,
- X représente un atome d'halogène, de préférence de chlore,
- a et b représentent zéro ou un ou deux, l'un au moins de a et de b n'étant pas nul, et sont tels que a + b ≤ 2.

A titre d'exemple, le dérivé organique du magnésium peut être choisi dans la liste suivante : chlorure d'éthylmagnésium, bromure d'éthylmagnésium, diéthylmagnésium, di n-butylmagnésium, di isobutylmagnésium, di n-hexylmagnésium, di n-octylmagnésium, (C₄H₉)₃ Mg₂ (C₂H₅).

L'aluminoxane est un composé comprenant au moins une liaison aluminium-oxygène et comprenant des radicaux organiques liés à son ou ses atomes d'aluminium.

L'aluminoxane peut par exemple être choisi parmi les composés de formule 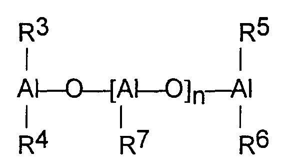 dans laquelle R³, R⁴, R⁵, R⁶ et R⁷, pouvant être identiques ou différents, représentent des radicaux alkyles comprenant de 1 à 12 atomes de carbone et de préférence de 1 à 6 atomes de carbone, n est un nombre entier allant de 0 à 40 et de préférence de 0 à 20. Les radicaux R⁴ et R⁶ peuvent également former ensemble un radical bivalent constitué d'un atome d'oxygène. A titre d'exemple d'aluminoxane, on peut citer le tétraisobutylaluminoxane, l'hexaisobutylaluminoxane.

La mise en contact de la première étape peut être réalisée en présence d'un solvant inerte vis-à-vis des différents ingrédients a), b) et, c).

Ce solvant peut par exemple être choisi parmi les hydrocarbures aliphatiques linéaires ou ramifiés, alicycliques ou aromatiques et peut comprendre de 3 à 14 atomes de carbone. A titre d'exemple, on peut citer comme solvant le propane, le butane, le pentane, l'hexane, l'heptane, l'octane, l'isododécane, le cyclohexane, le cyclopentane, la décaline, le toluène, le xylène, le benzène, l'éthylbenzène.

En fonction de la nature du solvant, il pourra être nécessaire d'effectuer la mise en contact sous pression de façon à ce que le solvant soit bien sous forme liquide.

Les ingrédients a) et b) peuvent être introduits dans le milieu de mise en contact de sorte que la masse de magnésium provenant du dérivé organique du magnésium représente 0,1 à 14 % en poids de la masse de support solide. L'aluminoxane peut être introduit de sorte que le rapport molaire du magnésium provenant du dérivé organique du magnésium sur l'aluminium provenant de l'aluminoxane aille de 0,5 à 200 et soit de préférence inférieur à 6.

La mise en contact de la première étape doit conduire à une bonne imprégnation du support solide par l'ingrédient b) et c). Pour améliorer cette imprégnation, il est préférable, après mise en contact des ingrédients a), b), et c) d'évaporer au moins partiellement et éventuellement totalement, le solvant utilisé pour ladite mise en contact.

Cette évaporation peut par exemple être réalisée par un balayage d'un gaz inerte comme l'azote ou l'argon, éventuellement à une pression inférieure à la pression atmosphérique, entre 50 et 100° C.

L'ordre de mise en contact entre les ingrédients a), b), c) et le solvant importe peu. En général, il est procédé de la façon suivante : le support est introduit dans le solvant, puis b) et le cas échéant c) sont introduits dans le milieu.

La mise en contact de la première étape peut par exemple être réalisée de la température ambiante à 120° C.

La mise en contact de la première étape mène à un premier solide.

Il convient, dans une deuxième étape, de mettre en contact ce premier solide avec un agent chlorant. L'agent chlorant peut être tout composé capable de greffer du chlore sur le magnésium du composé organique du magnésium en substitution d'au moins une partie des radicaux organiques de ce dernier, ainsi que sur l'aluminium de l'aluminoxane en substitution d'au moins une partie des radicaux organiques de ce dernier. L'agent chlorant peut être choisi parmi les chlorures d'alkyle dans lesquels le radical alkyle est primaire, secondaire ou tertiaire, parmi les polyhalogénures d'alkyle ou encore parmi les chlorures d'acide. Comme agent chlorant, on peut citer le chlorure de tertiobutyle, le chlorure de n-butyle, le dichloréthane, le chlorure de thionyle, le chlorure de benzoyle, l'acide chlorhydrique, le tetrachlorure de silicium, le chlorure d'un acide carboxylique, le chlorure de phosphore , le chlorure de bore, le phosgène, le chlore.

De préférence, pour cette seconde étape, dite de chloration, le nombre de mole d'atomes de chlore apporté par l'agent chlorant est au moins égale au nombre de mole de radicaux organiques liés aux atomes de magnésium du dérivé organique du magnésium, additionné, le cas échéant, du nombre de mole de radicaux organiques liés aux atomes d'aluminium de l'aluminoxane. L'agent chlorant peut être en excès par exemple de 10 à 1000 % par rapport à la quantité qui vient d'être définie.

La mise en contact de la deuxième étape peut être réalisée en présence d'un solvant inerte vis-à-vis des réactifs utilisés. On peut choisir comme solvant l'un des solvants déjà mentionnés pour la mise en contact de la première étape. La mise en contact de chloration peut être réalisée entre 20 et 120° C et de préférence entre 20 et 70° C.

Cette seconde étape mène à un second solide.

Il est possible d'isoler ce second solide, mais cela n'est pas indispensable. L'étape d'imprégnation par le dérivé d'un métal de transition peut être réalisée dans le même environnement que celui utilisé pour l'étape de chloration, sans qu'il ne soit nécessaire, par exemple, de laver le second solide ou d'éliminer le solvant utilisé pour la mise en contact de la seconde étape.

Le dérivé d'un métal de transition peut être tel que le métal de transition soit choisi parmi les éléments des groupes 3b, 4b, 5b, 6b, 7b, 8, les lanthamides, les actinides, de la classification périodique des éléments, tels que définis dans le Handbook of Chemistry and Physics, soixante et unième édition, 1980-1981. Ces métaux de transition sont de préférence choisis parmi le titane, le vanadium, le hafnium, le zirconium, le chrome. Lorsque le métal de transition est le titane, le dérivé du titane peut être choisi parmi les composés de formule Ti(OR)_{X}Cl_{4-X} dans laquelle R représente un radical hydrocarboné aliphatique ou aromatique contenant de un à quatorze atomes de carbone, ou représente COR¹ avec R¹ représentant un radical hydrocarboné aliphatique ou aromatique de un à quatorze atomes de carbone, et x représente un nombre entier allant de 0 à 3. Le dérivé d'un métal de transition peut par exemple être le tétrachlorure de titane.

L'imprégnation par le dérivé d'un métal de transition peut être réalisé en l'absence de solvant si ledit dérivé est liquide. Cependant, elle peut également être réalisée en présence d'un solvant. Ce solvant peut être choisi parmi les mêmes produits déjà envisagés pour les mises en contact des première et deuxième étape.

Plusieurs imprégnations successives peuvent être pratiquées. Généralement, on réalise une ou plusieurs imprégnations de façon à ce que la composante catalytique finale contienne de 0,1 à 15 % en poids de métal de transition.

Après imprégnation, le solide obtenu est lavé par un des solvants déjà évoqué de façon à éliminer les composés halogénés libres, c'est-à-dire non fixé sur le solide. On a ainsi obtenu une composante catalytique solide pour la polymérisation ou copolymérisation des oléfines. Cette composante peut être séchée par entraînement des espèces volatiles par un courant de gaz inerte tel que l'azote, éventuellement sous pression réduite, par exemple entre 30 et 120° C.

La composante catalytique peut être engagée en polymérisation ou copolymérisation d'au moins une oléfine. Par oléfine, on entend plus particulièrement celles comprenant deux à vingt atomes de carbone et en particulier les alpha-oléfines de ce groupe. Comme oléfine, on peut citer l'éthylène, le propylène, le 1-butène, le 4-méthyl-1-pentène, le 1-octène, le 1-hexène, le 3-méthyl-1-pentène, le 3-méthyl-1-butène, le 1-décène, le 1-tétradécène ou les mélanges d'au moins deux de ces oléfines. La composante selon l'invention peut être introduite dans les procédés de polymérisation ou copolymérisation en suspension, en solution, en phase gazeuse ou en masse, dans les conditions habituelles pour ce genre de composante catalytique. Pour le cas où l'on cherche à obtenir un polymère ou copolymère présentant une forme sensiblement homothétique de celle de la composante catalytique, il convient de choisir un procédé en suspension ou en phase gazeuse.

Un procédé de polymérisation ou copolymérisation en suspension consiste à réaliser une polymérisation ou copolymérisation dans un milieu inerte ne solubilisant pas ou très peu le polymère ou copolymère en formation. Pour un tel procédé, on peut choisir comme milieu inerte le n-heptane, le n-hexane, l'isohexane, l'isobutane ou un mélange d'isomères d'heptane, et l'on peut opérer à des températures allant jusqu'à 250° C et sous des pressions allant de la pression atmosphérique à 250 bars.

Un procédé de polymérisation en phase gazeuse peut être mis en oeuvre à l'aide de tout réacteur permettant une polymérisation en phase gazeuse et en particulier dans un réacteur à lit agité et/ou à lit fluidisé.

Les conditions de mise en oeuvre de la polymérisation en phase gazeuse, notamment température, pression, injection de l'oléfine ou des oléfines dans le réacteur à lit agité et/ou lit fluidisé, contrôle de la température et de la pression de la polymérisation, sont analogues à celles proposées dans l'art antérieur pour la polymérisation en phase gazeuse des oléfines. On opère généralement à une température inférieure au point de fusion Tf du polymère ou prépolymère à synthétiser, et plus particulièrement comprise entre +20° C et (Tf-5)°C, et sous une pression telle que l'oléfine ou les oléfines soient essentiellement en phase vapeur.

Suivant la nature du dérivé d'un métal de transition, il peut être nécessaire d'introduire dans le milieu de polymérisation ou copolymérisation un cocatalyseur capable d'activer ledit métal de transition. Par exemple, lorsque le dérivé d'un métal de transition est le titane, le cocatalyseur peut être choisi parmi les dérivés organiques de l'aluminium.

Ce dérivé organique de l'aluminium peut être un dérivé de formule R⁷R⁸R⁹Al dans laquelle R⁷, R⁸ et R⁹ pouvant être identiques ou différents, représentent chacun, soit un atome d'hydrogène, soit un atome d'halogène, soit un groupe alkyle contenant de 1 à 20 atomes de carbone, l'un au moins de R⁷, R⁸ ou R⁹ représentant un groupe alkyle. A titre d'exemple de composé adapté, on peut citer le dichlorure ou dibromure ou dihydrure d'éthylaluminium, le dichlorure ou dibromure ou dihydrure d'isobutylaluminium, le chlorure ou bromure ou hydrure de diéthylaluminium, le chlorure ou bromure ou hydrure de di-n-propylaluminium, le chlorure ou bromure ou hydrure de diisobutylaluminium. De préférence aux composés précités, on utilise un trialkylaluminium tel que le tri-n-hexylaluminium, le triisobutylaluminium, le triméthylaluminium, ou le triéthylaluminium.

Le cocatalyseur peut également être un alumoxane. Cet alumoxane peut être linéaire, de formule 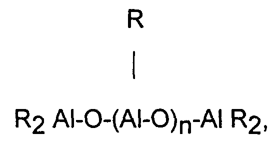 ou cyclique de formule 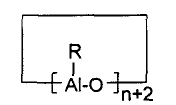 R représentant un radical alkyle comprenant de un à six atomes de carbone, et n étant un nombre entier allant de 0 à 40, de préférence de 0 à 20. L'aluminoxane peut comporter des groupements R de nature différente. De préférence, les groupements R représentent tous des groupements méthyle. Par ailleurs, par cocatalyseur, on entend également les mélanges des composés précités.

Les quantités de cocatalyseur utilisées doivent être suffisantes pour activer le métal de transition. Généralement, lorsqu'un dérivé organique de l'aluminium est utilisé comme cocatalyseur, on en introduit une quantité telle que le rapport atomique de l'aluminium apporté par le cocatalyseur sur le ou les métaux de transition que l'on souhaite activer aille de 0,5 à 10000 et de préférence de 1 à 1000.

La polymérisation ou copolymérisation peut faire intervenir un agent de transfert de chaînes, de manière à contrôler l'indice de fusion du polymère ou copolymère à produire. Comme agent de transfert de chaîne, on peut utiliser l'hydrogène, que l'on introduit en quantité pouvant aller jusqu'à 90 %, et se situant de préférence entre 0,01 et 60 % en mole de l'ensemble oléfines et hydrogène rené au réacteur.

Pour le cas où l'on souhaite un excellent contrôle morphologique des particules, il est recommandé de réaliser un prépolymérisation au moins partiellement en suspension sur les particules de composante catalytique solide, puis d'introduire les particules de prépolymère ainsi obtenues dans le procédé de polymérisation ou copolymérisation en suspension ou en phase gazeuse. La prépolymérisation est effectuée jusqu'à un degré adapté au procédé de polymérisation dans lequel le prépolymère sera ultérieurement mis en oeuvre.

Le terme prépolymère couvre bien entendu les copolymères obtenus par copolymérisation à faible degré d'avancement. Le terme prépolymérisation couvre donc également une copolymérisation au faible degré d'avancement.

Le degré de prépolymérisation est défini comme étant le poids de prépolymère, poids de composante catalytique solide inclu, divisé par le poids de la composante catalytique solide utilisée pour obtenir la masse de prépolymère considéré.

Le degré de prépolymérisation est supérieur à 1,05 et de préférence tel que le prépolymère formé représente au plus 1 % en poids du polymère final. Le degré de prépolymérisation est en général inférieur à 100.

Pour le cas où l'on n' introduirait pas d'aluminoxane à la préparation de la composante catalytique solide, un degré élevé d'avancement de prépolymérisation se traduirait par une augmentation de Mw/Mn, Mz/Mw et Mz du polymère ou copolymère final. Cette influence est beaucoup moins sensible lorsqu'un aluminoxane est utilisé à la préparation de la composante catalytique solide conformément à la présente invention. De plus, lorsqu'un aluminoxane a été utilisé, on peut se contenter de réaliser une prépolymérisation au faible degré d'avancement, par exemple compris entre 1,05 et 5 g/g sans que cela n'ait de conséquence notable sur la solidité des particules en croissance. Dans ce cas, l'étape de prépolymérisation peut donc être très courte.

Pour le cas où l'on souhaite obtenir un polymère ou copolymère final présentant un relativement faible Mz et un relativement fort indice de fusion à 190°C sous 5 kg (représenté par Ml₅, norme ASTM D 1238-P), et pour le cas où le métal de transition de la composante catalytique solide est le titane et que le cocatalyseur utilisé lors de la prépolymérisation est un dérivé organique de l'aluminium, il convient d'augmenter le rapport molaire Al/Ti de l'aluminium apporté par le cocatalyseur lors de la prépolymérisation sur le titane contenu dans la composante catalytique solide. Dans cette optique, le rapport molaire Al/Ti pourrait être compris entre 1,5 et 10, et de préférence entre 1,5 et 3.

Dans un mode préféré de prépolymérisation en suspension, sous agitation en régime turbulent, on prépolymérise à une température comprise entre 0° C et 110° C, de préférence entre 20° C et 60° C, pour une pression totale inférieure à 20 bars absolus constituée essentiellement de gaz inerte tel que l'azote. Afin de conserver au maximum la morphologie initiale de la composante catalytique et de son support, il est recommandé de contrôler l'alimentation en monomère dans le réacteur. Le contrôle de morphologie des particules de prépolymère en croissance est particulièrement délicat pour les catalyseurs sur support. Les tensions développées lors des procédés de synthèse de ces supports ne demandent qu'à être libérées sous l'effet de la prépolymérisation risquant d'entraîner la fragmentation des particules en croissance. Cette fragmentation peut être évitée lors de la prépolymérisation en maintenant une vitesse d'alimentation de la première heure de prépolymérisation inférieure ou égale à 0,5 mole x h⁻¹ x g⁻¹ de composante catalytique. Le débit de monomère est ensuite augmenté de façon à ce que celui-ci reste inférieur ou égal à 5 mole x h⁻¹ x g⁻¹ de prépolymère présent dans le réacteur à l'instant considéré.

Lorsque l'on destine le prépolymère à un procédé de polymérisation ou copolymérisation en phase gazeuse, on peut procéder à la prépolymérisation en suspension dans les conditions qui viennent d'être données jusqu'à un degré d'avancement réduit de prépolymérisation, par exemple inférieur à 5 g de polymère ou copolymère par gramme de composante catalytique, isoler le prépolymère, puis le reprendre dans un système de prépolymérisation en phase gazeuse de façon à passer du degré d'avancement réduit de prépolymérisation au degré de prépolymérisation adapté au procédé de polymérisation ultérieur.

A part les quelques particularité qui viennent d'être données, la prépolymérisation en suspension s'effectue dans les mêmes conditions que celles décrites précédemment, en général, pour une polymérisation ou copolymérisation en suspension.

L'éventuelle partie de prépolymérisation en phase gazeuse s'effectue dans les conditions habituelles au procédé de polymérisation ou copolymérisation en phase gazeuse. On peut, par exemple, associer dans un réacteur le prépolymère à degré d'avancement réduit à une charge de polyoléfine de granulométrie moyenne inférieure ou égale à 3000 et de préférence inférieure ou égale à 1000 µm. Après homogénéisation, on poursuit la prépolymérisation par introduction à débit contrôlé de monomère de façon à éviter l'éclatement et la formation d'agrégat. De façon préférentielle, la prépolymérisation en phase gazeuse est réalisée à une température comprise entre 40 et 80° C sous une pression totale, de monomère et de gaz inerte, inférieure ou égale à 20 bars. Cette prépolymérisation en phase gazeuse est poursuivie jusqu'à l'obtention d'un degré de prépolymérisation adapté au procédé de polymérisation ultérieur. Toutefois, il est recommandé que ce degré de prépolymérisation soit tel que le prépolymère formé représente au plus 1 % en poids du polymère final. Afin de conserver au maximum la morphologie initiale de la composante catalytique et de son support, il est recommandé de contrôler l'alimentation en monomère dans le réacteur. Une vitesse d'alimentation favorable pour la première heure est inférieure ou égale à 0,5 mole x h.⁻¹ x g⁻¹ de la composante catalytique. Le débit de monomère peut être augmenté de façon à ce que celui-ci reste inférieur ou égal à 5 mole x h⁻¹ x g⁻¹ de prépolymère présente dans le réacteur à l'instant considéré.

Lorsque l'hydrogène est utilisé comme agent de transfert de chaîne lors de la ou des prépolymérisations, et que la composante catalytique a été préparée sans aluminoxane (composé c)), il est préférable que la quantité d'hydrogène soit inférieure à 15 % et de manière encore préférée inférieure à 10 % en mole de l'ensemble hydrogène/oléfine amené au réacteur de prépolymérisation. De façon surprenante, il a en effet été constaté que dans ces conditions, le polymère ou copolymère final présentait un Mw/Mn, un Mz/Mw et un Mz plus fort.

De préférence, on n'introduit pas de donneur d'électron, ni au niveau de la préparation du premier solide, ni à celui du second solide, ni à celui de la composante catalytique ni à celui de son utilisation en prépolymérisation et/ou polymérisation. Dans la littérature, le donneur d'électron est généralement choisi parmi les acides carboxyliques aliphatiques ou aromatiques et leurs esters alkyliques, les éthers aliphatiques ou cycliques, les cétones, les esters vinyliques, les dérivés acryliques, en particulier acrylates d'alkyle ou méthacrylates d'alkyle et les silanes tels que les alcoxysilanes aromatiques, alicycliques ou aliphatiques. Sont habituellement cités dans la littérature comme donneurs d'électrons les composés tels que paratoluates de méthyle, benzoate d'éthyle, acétate d'éthyle ou de butyle, éther éthylique, paraanisate d'éthyle, dibutylphtalate, dioctylphtalate, diisobutylphtalate, tétrahydrofuranne, dioxane, acétone, méthylisobutylcétone, acétate de vinyle, méthacrylate de méthyle, le phényltriéthoxysilane, le cyclohexylméthyldiméthoxydilane, le dicyclopentyldiméthoxysilane et l'un de ceux cités dans le demande de brevet EP 0361493.

Comme le montrent les exemples, des copolymères de l'éthylène et d'une alpha-oléfine comprenant de 3 à 12 atomes de carbone, et dont 0,1 à 1,5 % des unités en mole sont issus de l'alpha-oléfine, et présentant une densité allant de 0,960 à 0,940, une teneur en métal de transition comme le titane inférieure à 6 ppm et même inférieure à 5 ppm, un Mw/Mn supérieur à 7, un Mz/Mw supérieur à 3,3 et un Mz supérieur à 300 000 peuvent être obtenus.

De tels copolymères trouvent en particulier une application en extrusion/soufflage pour la fabrication de corps creux.

Plus le corps creux est de volume important plus l'on recherche des valeurs élevées pour Mw/Mn, Mz/Mw et Mz. Les copolymères dont il vient d'être question peuvent même présenter un Mw/Mn supérieur à 10 si l'on utilise un aluminoxane dans la préparation de la composante catalytique solide, le rapport molaire du magnésium apporté par le dérivé organique du magnésium sur l'aluminium apporté par l'aluminoxane étant inférieur à 6.

L'utilisation de réacteurs en cascade permet même d'obtenir de tels copolymères présentant un Mw/Mn > 13, un Mz/Mw > 5 et un Mz > 600 000.

Des copolymères présentant une densité allant de 0,915 à 0,930 peuvent également être obtenus dès lors qu'on copolymérise l'éthylène avec une alpha-oléfine, l'alpha-oléfine représentant 2 à 6 % en mole de l'ensemble éthylène/alpha-oléfine amené au réacteur. Des Mw/Mn supérieures à 13 peuvent être obtenues dès lors que des réacteurs en cascade sont utilisés.

Au moins deux réacteurs peuvent être montés en cascade si l'on souhaite particulièrmeent élargir la distribution des masses moléculaires du polymère ou copolymère final. Bien entendu, cet effet d'élargissement n'est obtenu que si les réacteurs fonctionnent de façon différente et en particulier agissent de façon sensiblement différente sur les réactions de transfert. On peut par exemple faire fonctionner l'un des réacteurs de façon à ce qu'il favorise les réactions de transfert, tandis qu'un autre réacteur défavorise les réactions de transfert. Si les réactions de transfert sont favorisées, les masses moléculaires sont abaissées, et si les réactions de transfert sont défavorisées, les masses moléculaires sont augmentées. L'homme du métier sait comment favoriser ou défavoriser les réactions de transfert lors d'une polymérisation ou copolymérisation. En particulier, il sait qu'il peut jouer sur la teneur en hydrogène du milieu, la teneur en alpha-oléfine en tant que comonomère dans le milieu, ainsi que la température.

On donne ci-après les techniques utilisées dans les exemples :
- Mw, Mn, Mz : chromatographie à perméation de gel.
- Dp50 (Diamètre des particules en dessous duquel se trouvent 50 % en poids des particules):
   □ polymère ou copolymère : tamisage,
   □ composante catalytique solide : appareil granulométrique à laser de type MALVERN 1600.
- Pourcentage des particules de polymère ou copolymère présentant un diamètre inférieur à 100 µm (représenté par "% < 100 µ m" dans le tableau 1) tamisage.
- Densité des polymères ou copolymères : norme ISO 11-83 (représenté par D dans le tableau 1)
- Concentration surfacique en groupements hydroxyles sur le support : réaction du triéthylaluminium et suivi du dégagement d'éthane (thèse de V. Gaschard-Pasquet, Université Claude-Bernard-LYON 1, France, 1985, pages 221-224).

Les abréviations suivantes ont été utilisées dans les exemples et en particulier dans les tableaux :
- 4-M-1-P : 4-méthyl-1-pentène.
- d°av^{t} : degré d'avancement de prépolymérisation
- HEX-1 : hexène - 1
- Ti (ppm) teneur en titane du polymère ou copolymère final.
- Ml₅ : Indice de fusion sous 5 kg à 190°C (Norme ASTM D1238-P)
- Al/Ti rapport molaire de la quantité d'aluminium apporté par le cocatalyseur à la prépolymérisation sur la quantié de titane dans la composante catalytique solide.

### EXEMPLE comparatif 1 : Synthèse d'une composante catalytique solide

a) Dans une étuve sous atmosphère d'azote, on sèche 15 g de silice Grace 948 à 100° C sous vide partiel de 20 mbar pendant 15 h. Cette silice contient 8 fonctions silanol résiduelles (SiOH) par nm².
b) Dans un réacteur cylindrique de 0,5 I, muni d'une double enceloppe et d'une agitation mécanique non cisaillante, on place 10 g de la silice séchée à 110° C, puis sous agitation lente du solide sec on ajoute au goutte à goutte en 1/2 h, 25 millimoles de butyléthylmagnésium en solution à 20 % en poids dans l'heptane. L'agitation est maintenue 1/2 h puis le mélange est porté à 60° C sous balayage d'azote sec jusqu'à obtention d'une poudre sèche (environ 1/2 h). On ajoute à température ambiante 160 ml d'hexane sec puis on effectue un bullage d'acide chlorhydrique gazeux sec dans la suspension pendant 1h (environ 400 millimoles d'HCl). L'acide chlorhydrique est utilisé en large excès et la suspension en fin de chloration est fortement acide. On ajoute enfin 0.65 ml de TiCl₄ pur en une seule fois, puis on maintient la suspension sous agitation à 55° C pendant une heure.

Le catalyseur solide est filtré, lavé avec 3 fois 60 ml d'hexane puis séché sous courant d'azote à 55° C pendant 1 h. On isole 12 g de composante catalytique solide sèche possédant les caractéristiques suivantes : Ti = 2,2 % poids, Mg = 4,1 % poids, Dp50 = 48 µm.

### EXEMPLE comparatif 2 : Synthèse d'une composante catalytique solide.

L'exemple 1 est reproduit intégralement sauf que dans l'étape a), la silice Grace 948 est fluidisée par un courant d'azote à 800° C pendant 8 h. Cette silice contient 1,5 fonction silanol résiduelle par nm². Ensuite, 10 g de cette silice sont engagés dans l'étape b.

On isolde finalement 12,8 g de composante catalytique solide sèche possédant les caractéristiques suivantes : Ti = 2,5 % poids, Mg = 4,1 % poids, Dp50 = 47µm.

### EXEMPLE comparatif 3 : Synthèse d'une composante catalytique solide.

L'exemple 1 est reproduit intégralement excepté que dans l'étape a), la silice Grace 948 est traitée thermiquement à 110° C comme dans l'exemple 1, puis est ensuite traitée par l'hexaméthyldisilazane dans les conditions suivantes : 5 g d'hexaméthyldisilazane sont ajoutés sous atmosphère inerte à une suspension dans 120 ml d'hexane de 20 g de silice séchée à 110° C comme dans l'exemple 1. La suspension est laissé sous lente agitation à 25° C pendant 15 jours. Le solide obtenu est filtré puis lavé avec 3 fois 100 ml d'hexane. Il ne contient plus de fonction silanol dosable.

### EXEMPLES comparatifs 4, 5, 6 : Prépolymérisation

Les composantes catalytique solides des exemples 1, 2, 3 font l'objet d'une prépolymérisation (respectivement exemple 4, exemple 5, exemple 6) dans les conditions suivantes.

Dans un réacteur double enveloppe de 1 litre, on place sous atmophère inerte 400 ml d'hexane, 0.7 ml de trihexylaluminium (THA) pur et 4 g de composante catalytique solide. Le réacteur est ensuite pressurisé par 1 bar d'hydrogène puis alimenté en continu par de l'éthylène gazeux à un débit de 15 ml / h jusqu'à débit cumulé correspondant à une consommation d'éthylène de 10 g d'éthylène par gramme de composante catalytique solide puis à un débit de 25 ml / h jusqu'à débit cumulé correspondant à une consommation d'éthylène de 24 g d'éthylène par gramme de composante catalytique solide.

On obtient des prépolymères ayant un degré d'avancement de 25 g de prépolymère par g de composante catalytique solide.

### EXEMPLES comparatifs 7, 8, 9 : Polymérisation en phase gazeuse

Les prépolymères préparés selon les exemples 4, 5, 6 sont engagés en homopolymérisation de l'éthylène en phase gazeuse dans les conditions suivantes. Dans un réacteur double enveloppe sec de 8 litres muni d'une agitation et d'une régulation de température, on introduit sous atmosphère d'azote à 90° C sous une agitation de 400 révolutions par minute, 100 grammes d'une poudre sèche de polyéthylène provenant d'une polymérisation identique à celle présentement décrite, 0,5 millimole de THA, puis le réacteur est pressurisé par 2 bars d'azote, 4 bars d'hydrogène et 8 bars d'éthylène. On introduit ensuite par l'intermédiaire d'un sas et par poussée à l'azote 6 grammes de prépolymère et l'on poursuit l'injection d'azote jusqu'à obtenir une pression de 21 bars dans le réacteur. La pression est maintenue à cette valeur par injection en continu d'éthylène. Après 4 heures de réaction, la polymérisation est arrêtée par arrêt de l'alimentation en éthylène, le réacteur est décomprimé, purgé à l'azote et refroidi. On récupère le polymère. Les productivités et les caractéristiques de la poudre sont données dans le tableau 1.

### EXEMPLE comparatif 10 : Prépolymérisation

Dans un réacteur cylindrique de 1 I, muni d'une double enveloppe et d'un système d'agitation, on introduit à la température ambiante sous atmosphère d'azote, 0,6 l d'hexane, 6 millimoles de THA, 12,6 g de composante catalytique solide préparé dans les conditions de l'exemple 1.

On élève la température du mélange à 65° C et le réacteur est alimenté avec 6,4 g d'éthylène en 24 mn.

Puis on évapore le solvant par entraînement à l'azote à 65° C et on récupère, après retour à température ambiante, 19 g de prépolymère ayant un degré d'avancement de 1,5 g de prépolymère/g de composante catalytique solide.

### EXEMPLE comparatif 11 : Prépolymérisation

Dans un réacteur en acier inox de 2,5 I, muni d'une double enveloppe et d'un système d'agitation, on introduit à la température ambiante, 0,6 d'hexane, 8,4 millimoles de THA, 14,6 g de composante catalytique solide préparés dans les conditions de l'exemple 1. On élève la température du mélange à 65° C et le réacteur est alimenté avec un mélange H₂/C₂H₄ avec un rapport molaire H₂/C₂H₄ de 0,01 jusqu'à un débit cumulé de 350 g de C₂H₄, en 4h30 min.

Puis on évapore le solvant à 65° C par entraînement à l'azote, on refoidit et on ajoute sous agitation 28 millimoles de THA. On récupère sous azote, 365 g de prépolymère, ayant un degré d'avancement de 25 g de prépolymère/g de composante catalytique solide.

### EXEMPLE comparatif 12 : Prépolymérisation

On opère comme dans l'exemple 10, sauf que l'on alimente le réacteur avec un mélange H₂/C₂H₄ avec un rapport molaire H₂/C₂H₄ de 0,12 et que le débit cumulé de C₂H₄ est de 12,6 g. On récupère 25 g de prépolymère ayant un degré d'avancement de 2g de prépolymère/g de composante catalytique solide.

### EXEMPLES comparatifs 13 à 16 : Copolymérisation éthylène/héxène-1 en phase gazeuse.

On engage en copolymérisation éthylène/héxène-1 les composantes catalytiques solides ou prépolymères préparés respectivement selon l'exemple 1, 10, 11, 12 dans les conditions suivantes.

Dans un réacteur en acier inoxydable de 8,2 litres équipé d'une régulation thermique par double enveloppe et d'un système d'agitation, on introduit à 86° C après purge à l'azote et sous agitation de 400 révolutions par minute :
- 100 g de copolymère éthylène hexène-1 provenant d'un essai identique précédent,
- 0,73 millimole de THA pur,
- 0,2 bars d'hexène-1,
- 2,9 bars de H₂,
- 9.25 bars de C₂H₄.

On introduit ensuite x g de composante catalytique solide ou prépolymère préparé selon les exemples 1, 10, 11, 12 (respectivement x=0,2 g, 0,25 g, 5 g, 0,43 g) par poussée à l'azote jusqu'à ce que la pression totale à l'intérieur du réacteur atteigne 21 bars absolus. On maintient la pression à cette valeur par addition d'un mélange hexène-1/éthylène avec un rapport molaire hexène-1/éthylène de 0,01 durant quatre heures, puis on décomprime et on refroidit le réacteur. On récupère un copolymère éthylène/hexène-1 avec une productivité et des propriétés données dans le tableau 1.

### EXEMPLE 1 : Synthèse d'une composante catalytique solide.

On opère comme dans l'exemple comparatif 1, sauf qu'après avoir introduit du butyléthyl magnésium, on introduit 1,7 millimole de tétraisobutylaluminoxane. On isole 12,1 g de composante catalytique solide sèche ayant les caractéristiques suivantes : Ti = 2,1 % en poids, Mg = 4 % en poids, Al = 0,61 % en poids, Dp50 = 48,5.

### EXEMPLE 2 : Synthèse d'une composante catalytique solide

On opère comme dans l'exemple 1, sauf qu'on introduit 0,85 millimole de tétraisobutylaluminoxane au lieu de 1,7 millimoles. On isole 12,1 g de composante catalytique solide sèche ayant les caractéristiques suivantes : Ti = 2,4 % poids, Mg = 4 % poids, Al = 0,25 % poids, Dp50 = 48,4.

### EXEMPLE 3 : Prépolymérisation

On opère comme dans l'exemple comparatif 10, sauf que le catalyseur injecté est obtenu selon l'exemple 18 et que l'on introduit un mélange H₂/C₂H₄ = 0,01 molaire, la quantité d'éthylène restant la même que dans l'exemple 10. On récupère 19 g de prépolymère ayant un degré d'avancement de 1,5 g de prépolymère / g de composante catalytique solide.

### EXEMPLE 4 : Prépolymérisation

On opère comme dans l'exemple comparatif 11, sauf que la composante catalytique solide introduite est obtenue selon l'exemple 17. On récupère un prépolymère ayant un degré d'avancement de 25 g de prépolymère/g de composante catalytique solide.

### EXEMPLE 5 : Prépolymérisation

On opère comme dans l'exemple comparatif 10, sauf que la composante catalytique solide utilisée est obtenue selon l'exemple 17 et que l'éthylène est remplacé par 6,4 g de 4-méthyl-1-pentène. On obtient 19 g de prépolymère ayant un degré d'avancement de 1,5 g de prépolymère par g de composante catalytique solide.

### EXEMPLES 6 à 9 : Copolymérisation éthylène/hexène-1 en phase gazeuse

On engage en copolymérisation éthylène/hexène-1 les composantes catalytiques solides ou prépolymères préparés selon les exemples 1, 3, 4, 5 dans les conditions suivantes :

Dans un réacteur en acier inoxydable de 8,2 litres équipé d'une régulation thermique par double enveloppe et d'un système d'agitation, on introduit à 86° C après purge à l'azote et sous agitation de 400 révolutions par minute :
- 100 g de copolymère éthylène/hexène-1 provenant d'un essai identique précédent,
- 0,73 millimole de THA pur,
- 0,2 bars d'hexène-1,
- 2,9 bars de H₂,
- 9,25 bars de C₂H₄.

On introduit ensuite x g de composante catalytique solide ou prépolymère préparé selon les exemples comparatifs 1, 10, 11, 12 (respectivement x = 0,15 g, 0,25 g, 3 g, 0,25 g) par poussée à l'azote jusqu'à ce que la pression totale à l'intérieur du réacteur atteigne 21 bars absolus. On maintient la pression à cette valeur par addition d'un mélange hexène-1/éthylène avec un rapport molaire hexène-1/éthylène de 0,01 durant quatre heures, puis on décomprime et on refroidit le réacteur. On récupère un copolymère éthylène/hexène-1 avec une productivité et des propriétés données dans le tableau 1.

### EXEMPLE 10 : Prépolymérisation

On opère comme dans l'exemple 3, sauf que la composante catalytique solide utilisée est obtenue selon l'exemple 1. On récupère 19 g de prépolymère ayant un degré d'avancement de 1,5 g de prépolymère / g de composante catalytique solide.

### EXEMPLE 11 : Copolymérisation éthylène/héxène-1 en phase gazeuse en cascade

On engage en copolymérisation éthylène/héxène-1 le prépolymère préparé selon l'exemple 10, dans les conditions suivantes :

Dans un réacteur de 8,2 litres équipé d'une régulation thermique par double enveloppe et d'un système d'agitation, on introduit à 86° C après purge à l'azote et sous agitation de 400 révolutions par minute :
- 100 g de copolymère éthylène/hexène-1 provenant d'un essai identique précédent,
- 0,73 millimole de THA pur,
- 0,2 bar d'hexène-1,
- 0,5 bar de H₂,
- 9,25 bars de C₂H₄,

On introduit ensuite 0,2 g de prépolymère préparé selon l'exemple 10 par poussée à l'azote jusqu'à ce que la pression totale à l'intérieur du réacteur atteigne 21 bars absolus. On maintient la pression à cette valeur par addition d'un mélange hexène-1/éthylène avec un rapport molaire hexène-1/éthylène de 0,01, durant 1h45 min. Puis on décomprime et on purge le réacteur à l'azote.

On reconstitue une phase gazeuse par introduction de :
- 0,2 bars d'hexène-1,
- 5 bars de H₂,
- 9,25 bars de C₂H₄,
- le complément d'azote pour atteindre 21 bars absolus.

On maintient la pression à cette valeur par addition d'un mélange hexène-1/éthylène avec un rapport molaire hexène-1/éthylène de 0,01 durant 2h35min.

On récupère un copolymère éthylène/hexène-1 avec une productivité et des propriétés données dans le tableau 1.

### EXEMPLE 11 : Prépolymérisation

On procède comme pour l'exemple comparatif 10 sauf que l'on introduit 13,5 millimoles de THA à la place des 6 millimoles de THA, et sauf que la composante catalytique solide est celle obtenue par l'exemple 1. On obtient ainsi, 39 g de prépolymère dont le degré d'avancement est 3,1 g/g.

### EXEMPLE 12 : Prépolymérisation

On procède comme pour l'exemple 11 sauf que la composante catalytique solide est celle obtenue par l'exemple 2. On obtient ainsi 43 g de prépolymère dont le degré d'avancement est 3,4 g/g.

### EXEMPLE 13 : Prépolymérisation

On procède comme pour l'exemple 11, sauf que l'on introduit 3 millimoles de THA à la place des 13,5 millimoles de THA. On obtient ainsi 44 g de prépolymère dont le degré d'avancement est 3,5 g/g.

### EXEMPLES 14 à 16 : Copolymérisation éthylène/héxène-1 en phase gazeuse.

On procède comme pour les exemples comparatifs 13 à 16 sauf que l'on introduit respectivement les prépolymères des exemples 11, 12 et 13 à la place des composantes catalytiques solides.

Le tableau 2 rassemble les résultats.

### EXEMPLE 17 : Copolymérisation éthylène/héxène-1 en phase gazeuse en cascade

On engage en copolymérisation éthylène/héxène-1 le prépolymère préparé selon l'exemple 12, dans les conditions suivantes :

Dans un réacteur de 8,2 litres équipé d'une régulation thermique par double enveloppe et d'un système d'agitation, on introduit à 86° C après purge à l'azote et sous agitation de 400 révolutions par minute :
- 100 g de copolymère éthylène/hexène-1 provenant d'un essai identique précédent,
- 1,1 millimoles de THA pur,
- 0,2 bar d'hexène-1,
- 9 bar de H₂,
- 9,25 bars de C₂H₄,

On introduit ensuite 0,5 g de prépolymère préparé selon l'exemple 12 par poussée à l'azote jusqu'à ce que la pression totale à l'intérieur du réacteur atteigne 21 bars absolus. On maintient la pression à cette valeur par addition d'un mélange hexène-1/éthylène avec un rapport molaire hexène-1/éthylène de 0,01, durant 130 minutes. Puis on décomprime et on purge le réacteur à l'azote.

On reconstitue une phase gazeuse par introduction de :
- 0,2 bars d'hexène-1,
- 0,1 bars de H₂,
- 9,25 bars de C₂H₄,
- le complément d'azote pour atteindre 21 bars absolus.

On maintient la pression à cette valeur par addition d'un mélange hexène-1/éthylène avec un rapport molaire hexène-1/éthylène de 0,01 durant 62 min.

On récupère un copolymère éthylène/hexène-1 avec une productivité et des propriétés données dans le tableau 2.

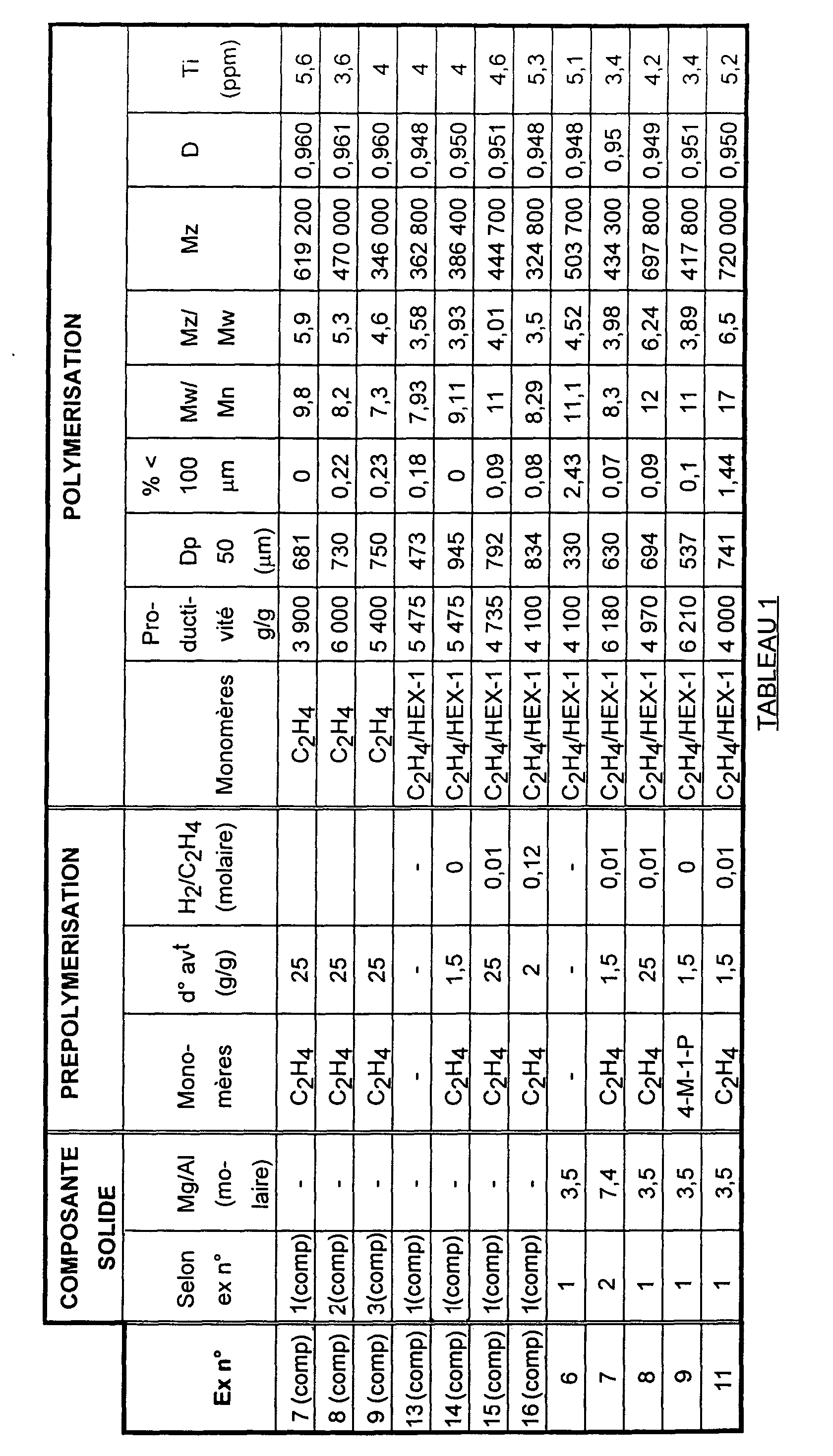

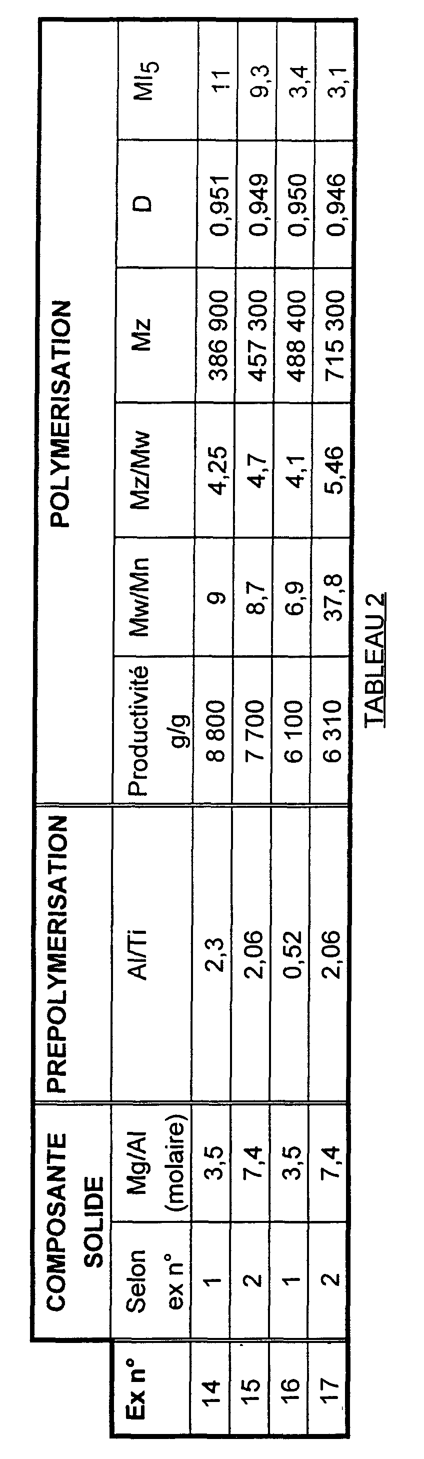

## Revendications

1. Procédé de fabrication d'une composante catalytique solide comprenant
- une première étape comprenant une mise en contact entre
a) un support solide comprenant à sa surface au moins 5 groupements hydroxyles par nanomètre carré, et,
b) un dérivé organique du magnésium, et,
c) un aluminoxane, pour obtenir un premier solide, puis,
- une seconde étape comprenant une mise en contact entre le premier solide et un agent chlorant pour obtenir un second solide, puis
- dans une étape postérieure, une imprégnation du second solide par un dérivé d'un métal de transition.

2. Procédé selon la revendication 1 **caractérisé en ce que** le support comprend à sa surface 6 à 19 groupements hydroxyles par nanomètre carré.

3. Procédé selon la revendication 1 ou 2 **caractérisé en ce que** le support est un oxyde métallique présentant une porosité allant de 1 à 4 cm³/g et dont au moins 10 % du volume total poreux est constitué de pores de diamètre allant de 7,5 à 30 nm.

4. Procédé selon l'une des revendications précédentes **caractérisé en ce que** l'aluminoxane est choisi parmi les composés de formule 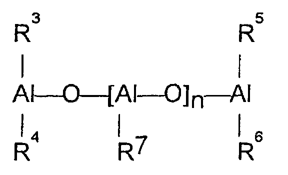 dans laquelle R³, R⁴, R⁵, R⁶ et R⁷, pouvant être identiques ou différents, représentent des radicaux alkyles comprenant de 1 à 12 atomes de carbone et de préférence de 1 à 6 atomes de carbone, n est un nombre entier allant de 0 à 40 et de préférence de 0 à 20, les radicaux R⁴ et R⁶ peuvent former ensemble un radical bivalent constitué d'un atome d'oxygène.

5. Procédé selon l'une des revendications précédentes **caractérisé en ce que** l'aluminoxane est introduit de sorte que le rapport molaire Mg/Al du magnésium provenant du dérivé organique du magnésium sur l'aluminium provenant de l'aluminoxane va de 0,5 à 200.

6. Procédé selon la revendication précédente **caractérisé en ce que** le rapport molaire Mg/Al est inférieur à 6.

7. Procédé selon l'une des revendications précédentes **caractérisé en ce que** la masse de magnésium provenant du dérivé organique du magnésium représente 0,1 à 14 % en poids de la masse de support.

8. Procédé selon l'une des revendications précédentes **caractérisé en ce que** le dérivé organique du magnésium est représenté par la formule R¹ₐR²_{b}MgX_{(2-a-b)} dans laquelle
- R¹ et R², pouvant être identiques ou différents représentant des radicaux alkyles ou alcoxy comprenant de 1 à 12 atomes de carbone,
- X représente un atome d'halogène, de préférence de chlore,
- a et b représentent zéro ou un ou deux, l'un au moins de a et de b n'étant pas nul, et sont tels que a + b < 2.

9. Procédé selon l'une des revendications précédentes **caractérisé en ce que** le nombre de mole d'atome de chlore apporté par l'agent chlorant est au moins égale au nombre de mole de radicaux organiques liés aux atomes de magnésium du dérivé organique de magnésium, additionné du nombre de mole de radicaux organiques liés aux atomes d'aluminium de l'aluminoxane.

10. Procédé selon l'une des revendications précédentes **caractérisé en ce que** le dérivé d'un métal de transition est TiCl₄.

11. Procédé selon l'une des revendications précédentes **caractérisé en ce qu'**aucun donneur d'électron n'a été utilisé.

12. Composante catalytique solide pouvant être obtenue par le procédé de l'une des revendications précédentes.

13. Procédé de préparation d'un prépolymère par prépolymérisation au moins partiellement en suspension d'au moins une oléfine en présence d'une composante catalytique solide selon la revendication 12.

14. Procédé selon la revendication précédente **caractérisé en ce que** le degré d'avancement de la prépolymérisation est compris entre 1,05 et 5 g/g.

15. Procédé selon la revendication 13 ou 14 **caractérisé en ce que** l'hydrogène est utilisé comme agent de transfert de chaîne, en quantité inférieure à 15 %, et de préférence 10 % en mole de l'ensemble hydrogène/oléfine amené au réacteur.

16. Procédé selon l'une des revendications 13 à 15 **caractérisé en ce qu'**aucun donneur d'électron n'est présent.

17. Procédé selon l'une des revendications 13 à 15 **caractérisé en ce que** le métal de transition est le titane et **en ce qu'**un dérivé organique de l'aluminium est utilisé comme cocatalyseur, et **en ce que** le raport Al/Ti de la quantité d'aluminium apportée par le cocatalyseur à la prépolymérisation sur la quantité de titane contenu dans la composante catalytique solide est compris entre 1,5 et 10.

18. Procédé selon la revendication 17 **caractérisé en ce que** le rapport Al/Ti est compris entre 1,5 et 3.

19. Prépolymère susceptible d'être obtenu par le procédé de l'une des revendications 13 à 18.

20. Procédé de polymérisation ou copolymérisation d'au moins une oléfine en présence d'une composante catalytique solide de la revendication 12 ou d'un prépolymère selon la revendication 19.

21. Procédé selon la revendication précédente **caractérisé en ce qu'**au moins deux réacteurs sont montés en cascade, lesdits réacteurs agissant de façon sensiblement différente sur les réactions de transfert.

## Patentansprüche

1. verfahren zur Herstellung einer katalytischen Feststoffkomponente, umfassend
- eine erste Stufe, umfassend ein in Kontakt bringen zwischen
a) einem Feststoffträger, umfassend auf seiner Oberfläche mindestens 5 Hydroxylgruppierungen pro Quadratnanometer, und
b) ein organisches Magnesiumderivat und
c) ein Aluminoxan zum Erhalten eines ersten Feststoffes, dann
- eine zweite Stufe, umfassend ein in Kontakt bringen zwischen dem ersten Feststoff und einem Chlorierungsmittel zum Erhalten eines zweiten Feststoffes, dann
- in einer späteren Stufe eine Imprägnierung von zweitem Feststoff durch ein Derivat eines Übergangsmetalls.

2. Verfahren nach Anspruch 1, **dadurch gekennzeichnet, daß** der Träger an seiner Oberfläche 6 bis 19 Hydroxylgruppierungen pro Quadratnanometer umfaßt.

3. Verfahren nach Anspruch 1 oder 2, **dadurch gekennzeichnet, daß** der Träger ein Metalloxid ist, eine Porösität zeigend, die von 1 bis 4 cm³/g geht, und wovon mindestens 10 % von porösem Gesamtvolumen von Poren von Durchmesser, gehend von 7,5 bis 30 nm, gebildet sind.

4. Verfahren nach einem von vorhergehenden Ansprüchen, **dadurch gekennzeichnet, daß** das Aluminoxan unter den Verbindungen von Formel 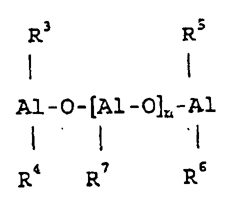 ausgewählt wird, wobei R³, R⁴, R⁵, R⁶ und R⁷ identisch oder unterschiedlich sein können, Alkylreste darstellend, umfassend von 1 bis 12 Kohlenstoffatome, und vorzugsweise von 1 bis 6 Kohlenstoffatome, n ist eine ganze Zahl, die von 0 bis 40 geht und vorzugsweise von 0 bis 20, die Radikale R⁴ und R⁶ können zusammen einen bivalenten Rest, gebildet aus einem Sauerstoffatom, bilden.

5. Verfahren nach einem von vorhergehenden Ansprüchen, **dadurch gekennzeichnet, daß** das Aluminoxan von der Art eingeführt wird, daß das Molverhältnis Mg/Al, abstammend von organischem Derivat von Magnesium, zu dem Aluminium, abstammend von dem Aluminoxan, von 0,5 bis 200 geht.

6. Verfahren nach dem vorhergehenden Anspruch, **dadurch gekennzeichnet, daß** das Molverhältnis Mg/Al niedriger als 6 ist.

7. Verfahren nach einem von vorhergehenden Ansprüchen, **dadurch gekennzeichnet, daß** die Masse von Magnesium, abstammend von organischem Derivat von Magnesium, 0,1 bis 14 Gew.% von der Masse vom Träger darstellt.

8. Verfahren nach einem von vorhergehenden Ansprüchen, dadurch gekenzeichnet, daß das organische Derivat von Magnesium durch die Formel R¹ₐR²_{b}MgX_{(2-a-b)} dargestellt ist, wobei
- R¹ und R² identisch oder unterschiedlich sein können, Alkyloder Alkoxyradikale darstellend, umfassend von 1 bis 12 Kohlenstoffatomen,
- X stellt ein Halogenatom dar, vorzugsweise von Chlor,
- a und b stellen Null oder eins oder zwei dar, eines mindestens von a und von b ist nicht Null, und sind so wie a + b ≤ 2.

9. Verfahren nach einem von vorhergehenden Ansprüchen, **dadurch gekennzeichnet, daß** die Molzahl von Chloratom, beigetragen von dem Chlorierungsmittel, mindestens gleich zur Molzahl von organischen Resten, gebunden an Atome von Magnesium von organischem Derivat von Magnesium, ist, hinzugefügt der Molzahl von organischen Resten, gebunden an Aluminiumatome von dem Aluminoxan.

10. Verfahren nach einem von vorhergehenden Ansprüchen, **dadurch gekennzeichnet, daß** das Derivat eines Übergangsmetalls TiCl₄ ist.

11. Verfahren nach einem von vorhergehenden Ansprüchen, **dadurch gekennzeichnet, daß** ein Elektronendonor nicht verwendet worden ist.

12. Katalytische Feststoffkomponente, die erhalten werden kann durch das Verfahren von einem von vorhergehenden Ansprüchen.

13. Verfahren von Herstellung eines Präpolymeren durch Vorpolymerisation mindestens teilweise in Suspension von mindestens einem Olefin in Anwesenheit einer katalytischen Feststoffkomponente nach dem Anspruch 12.

14. Verfahren nach dem vorhergehenden Anspruch, **dadurch gekennzeichnet, daß** der Grad von Fortschritt von Vorpolymerisation zwischen 1,05 und 5g/g enthalten ist.

15. Verfahren nach Anspruch 13 oder 14, **dadurch gekennzeichnet, daß** der Wasserstoff als Kettenübertragungsmittel in Menge unterhalb von 15% und vorzugsweise 10 Molprozent des gesamten Wasserstoff/Olefin, hinzugefügt zum Reaktor, verwendet wird.

16. Verfahren nach einem von Ansprüchen 13 bis 15, **dadurch gekennzeichnet, daß** ein Elektronendonor nicht vorhanden ist.

17. Verfahren nach einem von Ansprüchen 13 bis 15, **dadurch gekennzeichnet, daß** das Übergangmetall das Titan ist, und dadurch, daß ein organisches Derivat von dem Aluminium als Cokatalysator verwendet wird, und dadurch, daß das Verhältnis Al/Ti der Menge von Aluminium, beigetragen von dem Cokatalysator bei der Vorpolymerisation zu der Menge von Titan, enthalten in der katalytischen Feststoffkomponente, zwischen 1,5 und 10 enthalten ist.

18. Verfahren nach dem Anspruch 17, **dadurch gekennzeichnet, daß** das Verhältnis Al/Ti zwischen 1,5 und 3 enthalten ist.

19. Vorpolymer, empfänglich, erhalten zu werden durch das Verfahren von einem von Ansprüchen 13 bis. 18.

20. Verfahren von Polymerisation oder Copolymerisation von mindestens einem Olefin in Anwesenheit einer katalytischen Feststoffkomponente von Anspruch 12 oder von einem Vorpolymeren nach Anspruch 19.

21. Verfahren nach dem vorhergehenden Anspruch, **dadurch gekennzeichnet, daß** mindestens zwei Reaktoren in Kaskade montiert sind, wobei die genannten Reaktoren auf empfindlicherweise unterschiedliche Art gegenüber den Transferreaktionen wirken.

## Claims

1. Method for producing a solid catalytic component, comprising
- a first step which consists in contacting
a) a solid support comprising at its surface not less than 5 hydroxyl groups per square nanometre,
b) an organic derivative of magnesium, and
c) an aluminoxane, so as to obtain a first solid, followed by
- a second step which consists in contacting the first solid and a chlorinating agent so as to obtain a second solid, followed by
- in a subsequent step, impregnating the second solid with a derivative of a transition metal.

2. Method according to claim 1, **characterised in that** the support comprises at its surface 6 to 19 hydroxyl groups per square nanometre.

3. Method according to claim 1 or 2, **characterised in that** the support is a metal oxide exhibiting a porosity of from 1 to 4 cm³/g and of which not less than 10% of the porous total volume is made up of pores having a diameter ranging from 7.5 to 30 nm.

4. Method according to any of the preceding claims, **characterised in that** the aluminoxane is selected from compounds having the formula 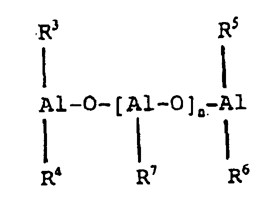 in which R³, R⁴, R⁵, R⁶ and R⁷, which may be the same or different, represent alkyl radicals having 1 to 12 carbon atoms, preferably 1 to 6 carbon atoms, n is an integer of from 0 to 40, preferably from 0 to 20, and the radicals R⁴ and R⁶ may together form a bivalent radical constituted by an oxygen atom.

5. Method according to any of the preceding claims, **characterised in that** the aluminoxane is introduced in such a way that the molar ratio Mg/Al of the magnesium obtained from the organic derivative of magnesium to the aluminium obtained from the aluminoxane ranges from 0.5 to 200.

6. Method according to the preceding claim, **characterised in that** the molar ratio Mg/Al is less than 6.

7. Method according to any of the preceding claims, **characterised in that** the magnesium mass obtained from the organic derivative of magnesium represents 0.1 to 14% by weight of the support mass.

8. Method according to any of the preceding claims, **characterised in that** the organic derivative of magnesium is represented by the formula R¹ₐR²_{b}MgX_{((2-a-b)} wherein
- R¹ and R², which may be the same or different, represent alkyl or alkoxy radicals having 1 to 12 carbon atoms,
- X represents a halogen atom, preferably chlorine,
- a and b represent 0 or 1 or 2, with at least one of a and b not being 0, and being such that a + b ≤ 2.

9. Method according to any of the preceding claims, **characterised in that** the molar number of chlorine atoms supplied by the chlorinating agent is at least equal to the molar number of organic radicals bound to the magnesium atoms in the organic magnesium derivative, added to the molar number of organic radicals bound to the aluminium atoms in the aluminoxane.

10. Method according to any of the preceding claims, **characterised in that** the transition metal derivative is TiCl₄.

11. Method according to any of the preceding claims, **characterised in that** no electron donor was used.

12. Solid catalytic component obtainable by the method of any of the preceding claims.

13. Method for preparing a prepolymer by prepolymerising, at least partly in suspension, at least one olefin in the presence of a solid catalytic component according to claim 12.

14. Method according to the preceding claim, **characterised in that** the degree to which prepolymerisation advances is between 1.05 and 5 g/g.

15. Method according to claim 13 or 14, **characterised in that** hydrogen is used as a chain transfer agent, in an amount of less than 15 mole %, preferably 10 mole %, of the hydrogen/olefin complex charged into the reactor.

16. Method according to any of claims 13 to 15, **characterised in that** no electron donor is present.

17. Method according to any of claims 13 to 15, **characterised in that** the transition metal is titanium and an organic derivative of aluminium is used as co-catalyst, and **in that** the Al/Ti ratio of the quantity of aluminium supplied by the co-catalyst to the prepolymerisation to the quantity of titanium contained in the solid catalytic component is between 1.5 and 10.

18. Method according to claim 17, **characterised in that** the Al/Ti ratio is between 1.5 and 3.

19. Prepolymer which can be obtained by the method claimed in any of claims 13 to 16.

20. Method of polymerising or copolymerising at least one olefin in the presence of a solid catalytic component as claimed in claim 12 or of a prepolymer according to claim 19.

21. Method according to the preceding claim, **characterised by** cascading not less than two reactors, said reactors acting on the transfer reactions in substantially different ways.
